(19) **Europäisches Patentamt / European Patent Office / Office européen des brevets**

(11) **EP 3 001 402 B1**

(12) **EUROPEAN PATENT SPECIFICATION**

(45) Date of publication and mention
of the grant of the patent:
**04.04.2018 Bulletin 2018/14**

(51) Int Cl.:
***G09C 5/00*** (2006.01)

(21) Application number: **14306482.2**

(22) Date of filing: **25.09.2014**

(54) **Undetectable encryption based on N-gram rotations**

Nicht nachweisbare Verschlüsselung auf Basis von N-Gramm-Rotationen

Cryptage indétectable sur la base des rotations N-gram

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.03.2016 Bulletin 2016/13**

(73) Proprietor: **ALCATEL LUCENT
92100 Boulogne-Billancourt (FR)**

(72) Inventors:
• **Jacquet, Philippe
91620 Nozay (FR)**
• **Milioris, Dimitrios
91620 Nozay (FR)**
• **Burnside, Gérard
91620 Nozay (FR)**

(74) Representative: **Berthier, Karine
Alcatel-Lucent International
Patent Business
Site Nokia Paris Saclay
Route de Villejust
91620 Nozay (FR)**

(56) References cited:
**US-B1- 6 823 068**

• **CHING-YUN CHANG ET AL: "Practical linguistic
steganography using contextual synonym
substitution and a novel vertex coding method",
COMPUTATIONAL LINGUISTICS, M I T PRESS,
US, vol. 40, no. 2, 1 June 2014 (2014-06-01), pages
403-448, XP058056156, ISSN: 0891-2017, DOI:
10.1162/COLI_A_00176**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to the technical domain of data for transmission over an open communication channel. More particularly, it relates to the technical domain of steganography. Steganography is the art of concealing the existence of a hidden message.

In particular, it may apply to the field of the transmission of sensitive data over data communication networks like the Internet.

BACKGROUND OF THE INVENTION

Definitions

The following terms are used early on in this specification, and will be defined here for convenience.

An n-gram is a series of n consecutive symbols extracted from a given text. The symbols making up an n-gram may, among other things, be words or letters. N-grams have an order which, if we are dealing with words, is the number of words in the N-gram. For example in the item of text "to be or not", if n (the order) equals 1, dividing this text into a set of n-grams will yield the sequence "to, be, or, not". If we divide this short text into 2-grams, this will yield a sequence consisting of "to be, be or, or not". If the text is divided into 3-grams, this will yield the sequences "to be or, be or not". If the n-grams consist of series of n consecutive letters, then an 1-gram sequence would read t, o, _, b, e, _, o, r, _, n, o, t, _, t, o, _, b, e, and a 2-gram sequence would read to, o_, _b, be, e_, _o, or, r_, _n, no, ot, t_, _t, to, o_, _b, be. In this specification, we shall consider the natural-language support text we use as a support for the encrypted message as being split up into n-grams consisting of a series of n consecutive letters. Typically, n may be 3 or 4.

A multi-graph is a graph comprising a number of nodes or vertices joined by arcs or edges in which there may be multiple edges between different nodes or vertices.

A syntax graph is a multi-graph the set of vertices of which contains all the n-grams of a given size in a given text.

A rotation as used herein is a permutation of the sequence of the arcs of a multi-graph. The arcs can indeed be ordered in a sequence which, when followed, allows to generate a text; a rotation is then a permutation of the sequence numbers of the arcs, leading to a different generated text.

A tuple as used herein is a sequence of numbers where each number can appear several times within the sequence. A k-tuple is a sequence of k numbers (or equivalently a tuple of size k).

Open communication channels allow transmission of information between peers by using an existing networking infrastructure, wherein malicious actions can be undertaken to intercept the information.

For this reason, data encryption techniques are sometimes implemented to avoid sensitive data being read and the content thereof being known by entities other than the allowed peers (e.g. the receiver and the sender or transmitter).

Sensitive data may be of numerous different types, including data transmitted between banks, clinical data whether or not this concerns a particular patient, information exchanged between customers and virtual market places; or any important business-to-business communication, etc.

Much research and development have been undertaken in this field to improve the performances of encryption and security mechanisms, so as to dramatically reduce the probability of encrypted transmitted data being hacked and finally decrypted by a malicious entity.

Nevertheless, each advancement in this direction usually gets counterbalanced by progress in hacking technologies. In particular, the development of cloud-computing or other massively parallel computing arrangements make it possible to decipher even sophisticated encryption schemes.

Consequently, it is difficult today to ensure the invulnerability of any encryption mechanism, and this situation can hinder further development of e-business applications and any applications implying transmission of sensitive data.

When classic encryption techniques are used, it can be fairly easy for a third party, which can be a malicious entity, to detect the fact that a stream on the communication channel between a transmitter and a receiver has been encrypted; this may lead to a massive attack if this third party has tremendous interception means and computing power. The fact is that prior existing cryptographic systems produce streams that are very difficult to hide. Consequently, it is currently very difficult to move secret information in a stealth mode.

It is known from US 6 823 068 to use graph theory to encrypt a message with a graph as an encryption key.

Various techniques have also been proposed for hiding secret information in seemingly innocuous cover messages. One current steganography technique consists in hiding secret information in an image, but this technique suffers from very low capacity. Indeed, the size of a secret information file with regard to the information support which is the image is very small. Large capacities are needed for small amounts of secret information which are going to be transmitted.

A 24-bit image could carry a reasonable amount of secret information but images of this size are rare and their size could easily attract attention during transmission.

SUMMARY OF THE INVENTION

The aim of the present invention is to alleviate at least partly the above mentioned drawbacks of conspicuousness of encryption, insufficient capacity or its counterpart consisting in unusual capacity likely to attract attention and in particular to provide a method for, firstly, transmitting secret information of a reasonable size and, secondly, doing this without drawing the attention of automated encryption detection mechanisms and the like on the lookout for encrypted data with a view to launching a massive attack to try and recover the secret information.

According to the invention, the transmission of encrypted data is performed so that this transmission is not detected and the malicious deciphering mechanisms are not undertaken.

This aim is achieved with a method for transmitting secret information over a communication channel between a transmitter and a receiver, comprising:

- determining by said transmitter a syntax graph from an information support, wherein the nodes of said syntax graph represent the n-grams of a given size in said information support,
- encrypting said secret information in a secret number N,
  determining by said transmitter a rotation from said secret number, the number N relative to the secret information being smaller than the maximum number of rotations $B(T\_S)$, and decomposing said secret number into a sequence representative of the permutations on each of the n-grams,
- applying said sequence on each of the n-grams in order to produce a rotated information.

Preferred embodiments comprise one or more of the following features, which can be taken separately or together, either in partial combination or in full combination.

According to an embodiment, the method comprises a step of transmitting said rotated information from said transmitter to said receiver.

According to another embodiment, the method comprises a step of determining by said receiver the sequence on each of the n-grams from said rotated information and deducing encrypted secret information.

According to an embodiment, said information is a text written in natural language.

According to an embodiment, the transmitter and the receiver have a separator sequence in common, for instance a carriage return, two blank spaces and one carriage return.

According to an embodiment, the encryption of said secret information is minimal and said rotation constitutes said secret information which is transmitted from the transmitter to the receiver without the use of an encryption key.

According to an embodiment, said natural-language support text constitutes said secret information wherein in the rotated natural-language support text received at the said receiver, still carries the secret information encrypted in the rotation whereby although the topic of said message is kind of visible in plain text form, detailed secret information may be recovered from the rotated natural-language support text.

According to an embodiment, said secret information is encrypted using weak encryption to protect only against eavesdropping, but encryption key can be recovered from clear text attack.

According to an embodiment, said secret information is encrypted using strong encryption to protect encryption key against clear text attack, e.g. AES, DES or tiny encryption.

According to an embodiment, in order to be smaller than the number of rotations over said natural-language support text equal to $B(T\_S)$, secret number N has one bit less than $B(T\_S)$.

According to an embodiment, in order to be smaller than the number of rotations over said natural-language support text equal to $B(T\_S)$, and for N constituting said secret number to have one bit less than $B(T\_S)$, the binary representation of N constituting said secret number has its first bits blocked at 0 and the remainder of its binary representation is obtained by the use of an encryption algorithm with a secret key shared between transmitter and receiver.

Another object of the invention concerns a transmitter for transmitting secret information to a receiver over a communication channel, said transmitter being adapted for:

- determining a syntax graph from an information support, wherein the nodes of said syntax graph represents the n-grams of a given size in said information support,
- encrypting said secret information in a secret number ,
- determining a rotation from said secret number, the number relative to the secret information being smaller than the maximum number of rotations $B(T\_S)$, and decomposing said secret number into a sequence representative of the permutations on each of the n-grams,
- applying said sequence on each of the n-grams in order to produce a rotated information,

- transmitting said rotated information to a receiver.

Another object of the invention concerns a receiver for receiving secret information from a transmitter over a communication channel, said receiver being adapted for:

- receiving rotated information from an emitter,
- determining a sequence from each of n-grams coming from a syntax graph of said rotated information and deducing encrypted secret information.

Another object of the invention concerns a communication network comprising at least a transmitter according to an embodiment herein disclosed and a receiver according to an embodiment herein disclosed.
Another object of the invention concerns a computer program product comprising computer-executable instructions for performing a method according to an embodiment herein disclosed.
Another object of the invention concerns a digital storage medium encoding a machine-executable program of instructions to perform a method according to any of embodiments herein disclosed.
The use of the above method ensures that the text which is transmitted still looks like a natural text, thus the presence of encryption is practically undetectable by massive and automated attacks. A rotation can code a similar amount of information to the amount of information contained in the supporting natural-language text.
Further features and advantages of the invention will appear from the following description of embodiments of the invention, given as nonlimiting examples, with reference to the accompanying drawings listed hereunder.

BRIEF DESCRIPTION OF THE DRAWINGS

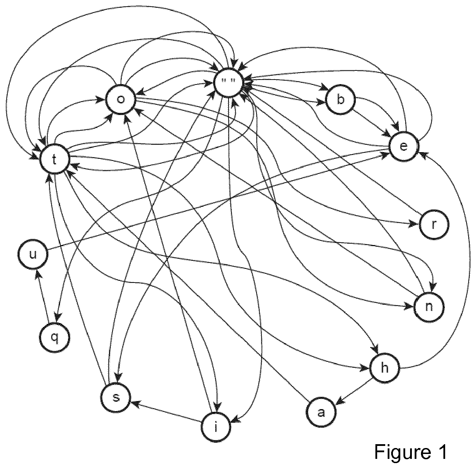

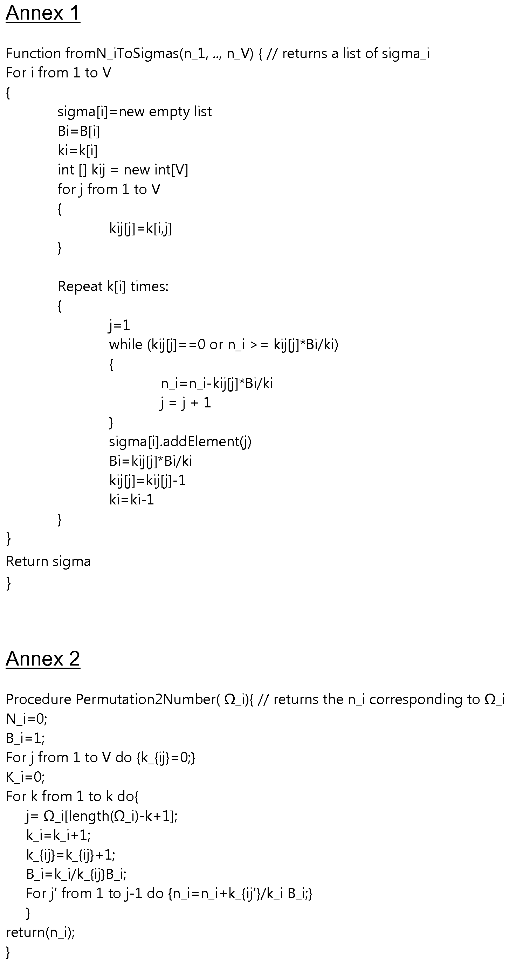

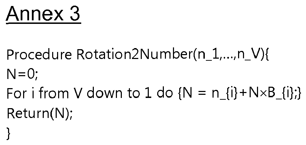

Fig. 1 shows an example for a syntax graph, corresponding to a 1-gram of a short text.

DETAILED DESCRIPTION OF THE INVENTION

The invention comprises transmitting information between a transmitter and at least one receiver over an open communication channel. Such an open communication channel can for example be a data network like the Internet, wherein the information is transmitted from node to node and is prone to be intercepted by malicious applications during transmission.
Such a channel can be wireline or wireless and the invention is independent of the underlying infrastructure put in place to convey the invention.
The originality of the invention is that the appearance of the transmitted information, although encrypted, is not changed, so that malicious software applications find difficulty in determining that a flow of information under study is encrypted or not.
Consequently, being undetected, the encrypted information will not be subject to massive deciphering techniques. The probability of attempts being made to decipher the transmitted information is therefore considerably reduced, regardless of the enciphering scheme.
In addition, when a malicious deciphering application has detected a transmitter or a receiver as transmitting or receiving encrypted information (regardless of whether or not it was successful in deciphering it), the application may tag it, so as to trigger further actions, such as systematically analyzing its transmitted information, trying to infiltrate it to steal further information, etc.
Therefore, an additional and previously un-addressed technical problem solved by the invention consists in avoiding it being determined by such an application that encrypted information is being transmitted.
In other words, the invention gives the possibility of stealthily transmitting this information.
The invention applies in particular to text transmission.
According to the invention, the information support T_S is a text written in a natural language text. Thus, the rotated information T'_S, generated by the method of the invention, which is transmitted over the communication channel, is then also a text written in natural language. In other terms, a message in the form of a natural-language support text T_S is provided to be transmitted over the open communications channel to a receiver.
Natural language is language which is spoken by human beings, and, according to the present invention, is language which seems to be a language spoken by human beings. For example, the following sentences "to be or not to be that is the question" or "tor o bes the thatio que non be ist tot" could be considered as sentences from natural languages, albeit non English in this example. On the contrary, the following symbols "AXB2TR" could not be considered as coming from a natural language.
Any malicious application analyzing such information will detect a text, with a typical text format (words, sentences...), and detecting that it is encrypted text would require a complex semantic analysis. In addition, such a semantic analysis would be made more difficult by having no information about the language used to write such a text.

This will be exemplified in the example below:

Let's take as an example the following to be transmitted:

"Up to now, the main methods used for text encryption are sophisticated algorithms that transform original data into an encrypted binary stream. The problem is that such streams are easily detectable under an automated massive attack, because they have a very different format and appearance to non-encrypted data, e.g. texts in natural language. This way any large scale data interception system would very easily detect encrypted texts. The result of this detection is twofold. First detected encrypted texts can be submitted to massive decryption processes on large computing resources, and finally be deciphered. Second, even when the texts would not eventually be deciphered, the source or the destination of the texts are at least identified as hiding their communications and therefore can be subject to other intrusive investigations. In other words encryption does not protect against a massive spying attack if encrypted texts are easily detectable. "

A possible encrypted text, resulting from application of the mechanisms of the invention can be as follows:

"Up to other interception are in natural language. The processes on large computing attack if encrypted algorithms that such stream. The resource or text encrypted binary streams are at least identified as hiding result of the decrypted data intrusive attack, because the encrypted encrypted massive deciphered, they are easily detect against a massive investigation does not even when the main methods used form original data into encryption is that transformat and finally be deciphered. Second, eventually be subject of non encryption of this detect ther words encryption problem is twofold. First detectable. In otherefore can be submitted texts are easily detectable under an automated texts are sophisticated texts can be destination system would not protected to now, the sources, and their communications and aspect to massive spying the texts in very different for the texts would very easily detections.

In this example, it is clear that the encrypted text looks like a text written in a natural language, and that it would require either manual intervention to determine that it is not a normal text, or a very complex automatic semantic analysis.

In addition, the rotated text comprises only relatively few grammatical or lexicographic errors, so that any detecting mechanisms based on first level errors will not detect anything and will consider such an encrypted text as "badly written normal text".

Accordingly, the rotated text will not be detected as encrypted and no deciphering mechanism will be triggered.

According to the invention, the transmitter determines a syntax graph G(T_S) from an information support T_S to be transmitted.

An n-gram is made up of consecutive symbols in a text, including blanks, punctuation, etc.

A syntax graph is a multi-graph G(T_S), in which the nodes represent all the n-grams of size r0 in given text T_S. The size r0 is supposed to be shared between the transmitter and the receiver(s). Typically, the n-gram size r0 is common between the transmitter and the receiver. The edge set contains the possible edges that connect a first n-gram A with a second n-gram B, if and only if the n-gram B follows immediately the n-gram A in the text T. In other words, B is obtained after a translation by one symbol of A in the original text T.

It is then necessary to enumerate the n-grams of the said selected n-gram size r0 in the support text T_S and to determine a number V of n-grams in the text T_S. For instance, assuming that r0=3, if the text is "ABCD", the n-gram "BCD" follows immediately the n-gram "ABC", and the syntax graph contains the nodes "ABC" and "BCD".

The method consists then of building the syntax graph for said information support T_S the set of vertices of which contains all the n-grams of size r0 in said information support T_S and the set of edges of which contains all of the possible edges between a first n-gram and a second n-gram if and only if the second n-gram immediately follows the first n-gram in the said information support T_S. This syntax graph and the way it is determined appears more clearly in the example depicted in FIG. 1. This example corresponds to a short text T as follows, and, for the simplicity of the explanation, n-grams of length 1 are considered:

T= "to be or not to be that is the question"
The size r0=1 corresponds to a letter-based approach.

In this case, each node or vertex corresponds to a letter present in the text T, and each arc corresponds to juxtaposition between 2 letters.

If a same juxtaposition is present several times, then the corresponding nodes are linked several times. For example, the juxtaposition of the letters "b" and "e" appears twice (in the word "be") and two arrows, on FIG. 1, link the node "b" to the node "e".

The rotated support text is transmitted from the transmitter to the receiver(s). The receiver may be a single receiver, in the case of one-to-one communication (unicast) or a plurality thereof in the case of one-to-many communication (multicast, anycast).

Upon reception of the encrypted information T'_S, the receiver can determine a syntax graph. This determination can be performed in the same way as previously described. The syntax graph G(T_S) determined at the receiver's end is the same as the one determined at the transmitters' end.

According to the invention, secret information I_S is to be transmitted between the transmitter and the receiver. Said secret information I_S is actually hidden in the rotation used to generate T'_S. More specifically, as the rotation is a sequence of edges permutations, said secret information I_S is hidden in the sequence of edges permutations.

For each vertex of the syntax graph, it is necessary to determine the number i of the corresponding n-gram and a number k_ij of edges going from the vertex corresponding to a n-gram i to the vertex corresponding to n-gram j.

The secret information I_S is encrypted in a secret number N which is chosen so as to be smaller than the number of rotations B(T_S) over text T_S. The number of rotations is such as :

$$B(T\_S) = B\_1 \, x \, ... \, x \, B\_i \, x ... \, x \, B\_V$$

wherein B_i is the number of permutations of the edges coming from the vertex corresponding to n-gram i, " i" being defined between 1 and "V" which is the number of n-grams in the text T_S. The number B_i of permutation going over the edges from the n-gram i is determined. To compute B_i we need the number k_i of edges going from the said vertex and the numbers k_ij of edges from said vertex corresponding to ngram i to the vertex corresponding to n-gram j. Thus we have the multinomial expression:

$$B\_i = k\_i! / (k\_i1! k\_i2! ... k\_iV!).$$

It is thus possible to determine the number B(T_S) of rotations over the information support T_S as the product of all the numbers B_i for i going from 1 to V.

The secret number N can be viewed as a stream of binary bits. To be smaller than the number of rotation B(T_S), the secret number N may have one bit less than the number of rotations B(T_S). According to an embodiment, the binary representation of the secret number N may have its first bits blocked at 0 and the remaining bits obtained by the use of an encryption algorithm with secret shared key.

Once the secret information I_S has been thus encrypted in an index N, there follows a step for determining by said transmitter a rotation from said secret number N.

According to the invention, the secret number N is transformed into a V-tuple ($\sigma\_1$, $\sigma\_i$ ..., $\sigma\_V$) made of k_{i1} 1's, k_{i2} 2's, ..., k_{iV} V's, indicating the order at which the edges must be taken from the n-gram i in the rotation of the secret number N. The index N may be first transformed into a tuple (n_1,... n_i...,n_V) by performing an operation such as :

$$For \ i = 1 \ to \ V$$

$$do$$

$$n\_i = N \ mod \ B\_i$$

$$N = (N - n\_i)/B\_i \quad /* \ N \ is \ modified \ at \ each \ iteration */$$

$$done$$

wherein each number n_i is smaller (by construction) than B_i that is the number of possible permutations for an n-gram i.

As seen previously, the rotation corresponds to a sequence of edges permutations. The rotation is a V-tuple (($\sigma\_1$..., $\sigma\_V$) where $\sigma\_i$ is a permutation on n-gram number i. A permutation $\sigma\_i$ can be given by a k_i-tuple, made up of k_{i1} 1's, k_{i2} 2's, ..., k_{iV} V's, indicating the order at which the edges must be taken when they are outgoing from n-gram number i. The tuple is a list, or similarly an ordered sequence of integers, $\sigma\_i0[k]$ is the kth element of this list: $\sigma\_i0[1]$ is therefore the first element and $\sigma\_i0[2]$ the second element.

According to an embodiment, in order to produce the rotated support, it is necessary to start by an arbitrary n-gram, e.g. n-gram i0, and identify this n-gram i0 as being the first of said rotated information T'_S. We consider the permutation tuple $\sigma\_i0$. We move to n-gram i1 with i1=$\sigma\_i0[1]$ and we remove the first entry of $\sigma\_i0$ (so the new first entry of $\sigma\_i0$ is the former $\sigma\_i0[2]$). We add to the rotated information T'_S the last symbol of n-gram i1 and then we move to n-gram i2 with i2= σ_i1[1], add the last symbol of n-gram i2 to T'_S and remove the first entry of σ_i1. This first phase stops when we arrive to an n-gram j with its current permutation tuple σ_j empty.

If there still exists an n-gram i with a non-empty permutation tuple σ_i, then we add to the rotated information T'_S a separator sequence (known to the receiver) plus the n-gram i and we start a second phase of building said rotated information T'_S as we did in the first phase operating on n-gram i instead of on n-gram i0.

We repeat this same operation with as many phases as are needed to get all permutation tuples emptied.

As seen above, the sender and the receiver have in common a separator sequence (not initially present in the support text T_S), e.g. one carriage return, two blank spaces and one carriage return, used to denote the fact that we ran out of edges on the n-gram preceding the separator. Finally, the rotated information T'_S is sent from the transmitter to the receiver and, at receiver's side, an algorithm is applied to said rotated information T'_S in order to reconstitute said secret number N.

Consequently, in order to implement the rotation on the information support T_S, it is necessary to populate a k_i tuple σ_i with integers between 1 and V. The algorithm implementing this step is shown in annex 1. The parts of the text separated by the separator sequence are called the components. Their number is expected to be of the order of log V.

When recovering the rotated support text T'_S, all the n-grams of a size r_0 (r_0 is supposed to be common with the receiver and is used in order to determine V which is in fact the number of n-grams of size r_0 in the text T_S) are collected, omitting the n-grams overlapping the separator sequence. Then the receiver builds the syntax graph between those n-grams and computes the numbers k_{ij} and k_i's that should be the same for text T_S. It also populates the permutations tuple σ_i that usually differ from those of T_S. For each n-gram i, we collect the permutation σ_i given by the sequence of edges taken in the rotated text T'_S. An example of such a computation is shown in annex 2.

It is then necessary to produce the secret number N from tuple of number (n_1,...,n_V). An example of such a computation is shown in annex 3.

According to an embodiment, the method includes the steps of:

- collecting all the n-grams of size r_0, omitting those n-grams which overlap the separator sequence,
- building the syntax graph between all the said n-grams, and
- computing the numbers k_{ij} and k i's,
- populating the permutations tuple σ_i for each n-gram, for instance n-gram i collecting the permutation σ_i given by the sequence of edges going from said vertex taken in the rotated text,
- producing the secret number N constituting said secret from the said permutations tuple, and,
- applying a decoding algorithm with a secret key in order to recover said hidden information.

## EXAMPLE OF IMPLEMENTATION OF AN EMBODIMENT OF THE METHOD

For example, the n-grams consist of series of n consecutive letters, wherein n equals 1, the following sequence of edges generates the text "ACABBD":

- n-gram A: {C,B} (the vertex A comprising two outgoing edges, k_1=2),
- n-gram B: {B,D} (the vertex B comprising two outgoing edges, as a consequence k_2=2),
- n-gram C: {A} (the vertex C comprising one outgoing edge, k_3=1),
- n-gram D: {} (the vertex comprising 0 outgoing edge, k_4=0)

The above mentioned n-grams are ordered lexicographically.

To compute, B_i, we need the number k_i of edges going from the vertex and the number k_ij of edges from said vertex i to the vertex corresponding to n-gram j. Assuming that vertex A corresponds to n-gram 1, vertex B corresponds to n-gram 2, vertex C corresponds to n-gram 3, vertex D corresponds to n-gram 4, the numbers k_i of outgoing edges are as follows :

$$k\_1 = 2; k\_2 = 2; k\_3 = 1; k\_4 = 0$$

The numbers k_ij of edges from said vertex I to the vertex corresponding to n-gram j are as follows:

- k_11=0; k_12=1; k_13=1; k_14=0;
- k_21=0; k_22=1; k_23=0; k_24=1;
- k_31=1; k_32=0; k_33=0; k_34=0;
- k_41=0; k_42=0; k_43=1; k_44=0.

It is therefore possible to compute B_i from the expression B_i=k_i!/(k_il!k_i2!...k_iV!). For instance:

$$B\_1 = k\_1! / (k\_11! \, k\_12! \, k\_13! \, k\_14!) = 2/(1*1*1*1) = 2$$

Then :$B\_2=2$, $B\_3=1$ and $B\_4=1$.

It is then possible to transform the secret number N into a tuple for which the numbers n_i has been performed such as :

$$For \; i = 1 \; to \; V$$

$$do$$

$$n\_i = N \; mod \; B\_i$$

$$N = (N - n\_i)/B\_i \quad /* \; N \; is \; modified \; at \; each \; iteration */$$

$$done$$

For instance, for a secret number N equals to 1 :

$$n\_1 = N \; mod \; B\_1 = 1 \; mod \; 2 = 1$$

$$N = (N-n\_1)/B\_1 = (1-1)/2 = 0 \quad /* \; note \; that \; N \; is \; modified \; */$$

$$n\_2 = N \; mod \; B\_2 = 0 \; mod \; 2 = 0$$

$$N = (N-n\_2)/B\_2 = (0-0)/2 = 0$$

n_3 and n_4 are equals to 0, too.

For a secret number such as N=1, the tuple n_i is as follows (1,0,0,0).

In a second example wherein the secret number N equals to 2:

$$n\_1 = N \; mod \; B\_1 = 2 \; mod \; 2 = 0$$

$$N = (N-n\_1)/B\_1 = (2-0)/2 = 1$$

$$n\_2 = N \; mod \; B\_2 = 1 \; mod \; 2 = 1$$

$$N = (N-n\_2)/B\_2 = (1-1)/2 = 0$$

n_3 and n_4 are equals to 0, too.

For a secret number such as N=2, the tuple n_i is as follows (0,1,0,0).

After decomposing the secret number N into a sequence representative of the permutations on each of the n-grams, it is then necessary to populate the k_i tuple σ_i with integers between 1 and V. The permutation σ_i can indicate the order at which the edges must be taken when departing the n-gram number i.

In the example above mentioned (text "ACABBD"), for the vertex A corresponding to n-gram1, the order at which the edges must be taken is {C;B} that is equivalent to {3;2}.

Considering a lexicographic order, for the vertex A corresponding to n-gram1, the order at which the edges must be taken is {B;C}, that is equivalent to {2;3}. For the vertex B corresponding to n-gram2, the order at which the edges must be taken is {B;D}, that is equivalent to {2;4}. For the vertex C corresponding to n-gram3, the order at which the edges must be taken is {A}, that is equivalent to {1}. For the vertex D corresponding to n-gram4, there is no outgoing edge.

In this example, the rotation is a 4-tuple ($\sigma$_1, $\sigma$_2, $\sigma$_3, $\sigma$_4) where each of the elements of $\sigma$_i ($\sigma$_1, $\sigma$_2, $\sigma$_3, $\sigma$_4) is a permutation on the outgoing edges of n-gram number i.

The permutation of $\sigma$_1 is given by a 2-tuple (as k_1 = 2) made up of k_12 and k_13, indicating the order at which the edges must be taken when they are outgoing from n-gram1. The permutation of $\sigma$_2 is given by a 2-tuple (as k_2 = 2) made up of k_22 and k_24, indicating the order at which the edges must be taken when they are outgoing from n-gram2. The permutation of $\sigma$_3 is given by a 1-tuple (as k_3 = 1) made up of k_31 indicating the edge outgoing from n-gram3. There is no permutation $\sigma$_4 as k_4 = 0.

Classically, the calculation of the permutation on the n-grams is made by the algorithm shown in Annex 1 at transmitter's side and in Annex 2 at receiver's side.

For each n-gram i, the calculation of the permutation $\sigma$_i on the n-grams are given by the sequence of edges taken in the rotated text T'_S, as shown in Annex 2. For instance, we assume that the edges are in a lexicographic order :

1={2;3}; 2={2;4}; 3={1} and 4={}

In order to produce the rotated support, it is necessary to start by an arbitrary n-gram, e.g. n-gram1. The n-gram1 (character "**A**" is the first n-gram of text T'_S. The first entry of $\sigma$_1 is removed (so the new first entry of $\sigma$_1 is the former $\sigma$_1[2]). We move to n-gram3 with 3= $\sigma$_1[1], we add the character "**C**". We add to T'_S the last symbol of n-gram3 which is the character "**A**" and we move to ngram1 with 1= $\sigma$_3[1], add the last symbol of n-gram1 which is the character "**B**" and remove the first entry of $\sigma$_1. Then, we move to n-gram2 with 2= $\sigma$_1[2], we add the character "**B**". We add to T'S the last symbol of n-gram2 which is the character "**D**". Thus, the rotated text T'_S is ACABBD.

We have now edges which are ordered as follows : 1={3;2}; 2={2;4}; 3={1} and 4={}.

By applying another rotation to the text "ACABBD", the rotated text T'_S is then "ABD*CA*B". By applying another rotation to the text "ABD*CA*B", the rotated text T'_S is then ACABD*B.

Then, from these information, in particular the information relative to the tuple ($\sigma$_1, $\sigma$_2, $\sigma$_3, $\sigma$_4), the encrypted secret information I_S can be deduced.

The invention has been described with reference to preferred embodiments. However, many variations are possible within the scope of the invention.

**Claims**

**1.** Method for transmitting secret information (I_S) over a communication channel between a transmitter and a receiver, comprising:

- determining by said transmitter a syntax graph G(T_S) from an information support T_S, wherein the nodes of said syntax graph G(T_S) represents the n-grams of a given size in said information support T_S,
- encrypting said secret information I_S in a secret number N,
- determining by said transmitter a rotation from said secret number N, the number N relative to the secret information I_S being smaller than the maximum number of rotation B(T_S), and decomposing said secret number N into a sequence representative of the permutations on each of the n-grams' outgoing edges,
- applying said sequence on each of the n-grams' outgoing edges of the syntax graph G(T_S) in order to produce a rotated information T'_S, and

transmitting said rotated information T'_S from said transmitter to said receiver.

**2.** Method according to claim 1, comprising a step of determining by said receiver the sequence of each of the n-grams from said rotated information T'_S and deducing encrypted secret information I_S.

**3.** Method according to any one of claims 1 or 2, wherein said information support T_S is a text written in a natural language.

**4.** Method according to any one of claims 1 to 3, wherein the transmitter and the receiver have a separator sequence in common, for instance a carriage return, two blank spaces and one carriage return.

**5.** Method according to any one of claims 1 to 4, wherein the encryption of said hidden information (I_S) is minimal and said rotation constitutes said secret information which is transmitted from the transmitter to the receiver without the use of an encryption key.

6. Method according to any one of claims 1 to 5, wherein secret information (I_S) is encrypted using weak encryption to protect for only against eavesdropping, but the secret number N can be recovered from clear text attack.

7. Method according to any one of claims 1 to 5, wherein said secret information (I_S) is encrypted using strong encryption to protect encryption key against clear text attack.

8. Transmitter for transmitting secret information (I_S) to a receiver over a communication channel, said transmitter being adapted for:

   - determining a syntax graph G(T_S) from an information support T_S, wherein the nodes of said syntax graph G(T_S) represents the n-grams of said information support T_S,
   - encrypting said secret information I_S in a secret number N,
   - determining a rotation from said secret number N, the number N relative to the secret information I_S being smaller than the maximum number of rotations B(T_S), and decomposing said secret number N into a sequence representative of the permutations on each of the n-grams' outgoing edges,
   - applying said sequence on each of the n-grams' outgoing edges in order to produce a rotated information T'_S,

   the transmitter being adapted for transmitting said rotated information T'_S to a receiver.

9. Receiver for receiving secret information (I_S) from a transmitter over a communication channel, said receiver being adapted for:

   - receiving rotated information T'_S from a transmitter,
   - determining a syntax graph G(T'_S) from the received rotated information T'_S, wherein the nodes of said syntax graph G(T'_S) represents the n-grams of said rotated information T'_S,
   - determining a sequence from each of n-grams coming from the syntax graph G(T'_S) of said rotated information T'_S, said sequence being representative of permutations on each of the n-grams edges,
   - computing a secret number N from said sequence
   - and deducing secret information I_S encrypted in said secret number N.

10. Communication network comprising at least a transmitter according to claim 8 and a receiver according to claim 9.

11. Computer program product comprising computer-executable instructions for performing a method according to any of claims 1 to 7.

12. Digital storage medium encoding a machine-executable program of instructions to perform a method according to any of the claims 1 to 7.

**Patentansprüche**

1. Verfahren zum Übertragen von geheimer Information (I_S) über einen Kommunikationskanal zwischen einem Sender und einem Empfänger, umfassend:

   - Bestimmen durch besagten Sender eines Syntaxgraphen G(T_S) aus einem Informationsträger T S, wobei die Knoten besagten Syntaxgraphen G(T_S) die N-Grams einer gegebenen Größe in besagtem Informationsträger T_S darstellen,
   - Codieren besagter geheimen Information I_S in einer Geheimzahl N,
   - Bestimmen durch besagten Sender einer Rotation aus besagter Geheimzahl N, wobei die Nummer N in Bezug zur geheimen Information I_S kleiner ist als die maximale Rotationszahl B(T_S), und Zerlegen besagter Geheimzahl N in eine Sequenz, die repräsentativ ist für die Permutationen an jeder der ausgehenden Kanten des N-Grams,
   - Anwenden besagter Sequenz auf jede der ausgehenden Kanten der N-Grams des Syntaxgraphen G(T_S), um eine gedrehte Information T'_S zu erzeugen, und Übertragen besagter gedrehten Information T'_S von besagtem Sender auf besagten Empfänger.

2.  Verfahren nach Anspruch 1, umfassend einen Schritt des Bestimmens durch besagten Empfänger der Sequenz eines jeden N-Grams aus besagter gedrehten Information T'_S und Ableiten der codierten geheimen Information I_S.

3.  Verfahren nach einem beliebigen der Ansprüche 1 oder 2, wobei besagter Informationsträger T_S ein Text ist, der in einer natürlichen Sprache geschrieben worden ist.

4.  Verfahren nach einem beliebigen der Ansprüche 1 bis 3, wobei der Sender und der Empfänger eine gemeinsame Trennsequenz aufweisen, zum Beispiel einen Zeilenumbruch, zwei Leerzeichen und einen Zeilenumbruch.

5.  Verfahren nach einem beliebigen der Ansprüche 1 bis 4, wobei die Codierung besagter versteckten Information (I_S) minimal ist und wobei besagte Rotation besagte geheime Information darstellt, die von dem Sender auf den Empfänger übertragen wird, ohne einen Codierschlüssel zu verwenden.

6.  Verfahren nach einem beliebigen der Ansprüche 1 bis 5, wobei die geheime Information (I_S) codiert ist unter Verwenden einer schwachen Codierung, um sie nur vor Lauschangriffen zu schützen, die Geheimzahl N aber von einem eindeutigen Textangriff zurückerhalten werden kann.

7.  Verfahren nach einem beliebigen der Ansprüche 1 bis 5, wobei besagte geheime Information (I_S) codiert ist unter Verwenden einer starken Codierung, um den Codierschlüssel vor eindeutigen Textangriffen zu schützen.

8.  Sender zum Übertragen von geheimer Information (I_S) auf einen Empfänger über einen Kommunikationskanal, wobei besagter Sender ausgelegt ist:

    - zum Bestimmen eines Syntaxgraphen G(T_S) von einem Informationsträger T_S, wobei die Knoten besagten Syntaxgraphen G(T_S) die N-Grams besagten Informationsträger T_S darstellen,
    - zum Codieren besagter geheimen Information I_S in einer Geheimzahl N,
    - zum Bestimmen einer Rotation aus besagter Geheimzahl N, wobei die Nummer N in Bezug zur geheimen Information I_S kleiner ist als die maximale Rotationszahl B(T_S), und Zerlegen besagter Geheimzahl N in eine Sequenz, die repräsentativ ist für die Permutationen an jeder der ausgehenden Kanten des N-Grams,
    - zum Anwenden besagter Sequenz auf jede der ausgehenden Kanten der N-Grams, um eine gedrehte Information T'_S zu erzeugen, wobei der Sender ausgelegt ist zum Übertragen besagter gedrehten Information T'_S auf einen Empfänger.

9.  Empfänger zum Empfangen von geheimer Information (I_S) von einem Sender über einen Kommunikationskanal, wobei besagter Empfänger ausgelegt ist:

    - zum Empfangen von gedrehter Information T'_S von einem Sender,
    - zum Bestimmen eines Syntaxgraphen G(T'_S) von der besagten gedrehten Information T'_S, wobei die Knoten besagten Syntaxgraphen G(T'_S) die N-Grams besagter gedrehten Information T'_S darstellen,
    - zum Bestimmen einer Sequenz aus jedem der N-Grams, die aus dem Syntaxgraphen G(T'_S) aus besagter gedrehten Information T'_S stammen, wobei besagte Sequenz repräsentativ ist für Permutationen an jeder der Kanten der N-Grams,
    - zum Berechnen einer Geheimzahl N aus besagter Sequenz,
    - und zum Ableiten besagter geheimen Information I_S, die in besagter Geheimzahl N codiert ist.

10. Kommunikationsnetzwerk, umfassend mindestens einen Sender nach Anspruch 8 und einen Empfänger nach Anspruch 9.

11. Computerprogramm-Produkt, umfassend computerausführbare Befehle zum Durchführen eines Verfahrens nach einem beliebigen der Ansprüche 1 bis 7.

12. Digitales Speichermedium, das ein maschinenausführbares Programm von Befehlen codiert zum Ausführen eines Verfahrens nach einem beliebigen der Ansprüche 1 bis 7.

**Revendications**

1.  Procédé de transmission d'informations secrètes (I_S) sur un canal de communication entre un émetteur et un récepteur, comprenant les étapes suivantes :

- déterminer par ledit émetteur un diagramme syntaxique G(T_S) à partir d'un support d'informations T_S, les noeuds dudit diagramme syntaxique G(T_S) représentant les n-grammes d'une taille donnée dans ledit support d'informations T_S,
- chiffrer lesdites informations secrètes I_S dans un nombre secret N,
- déterminer par ledit émetteur une rotation à partir dudit nombre secret N, le nombre N relatif aux informations secrètes I_S étant plus petit que le nombre maximal de rotation B(T_S), et décomposer ledit nombre secret N en une séquence représentant les permutations sur chacun des arcs sortants des n-grammes,
- appliquer ladite séquence sur chacun des arcs sortants des n-grammes du diagramme syntaxique G(T_S) afin de produire des informations ayant subi une rotation T'_S, et transmettre lesdites informations ayant subi une rotation T'_S dudit émetteur audit récepteur.

**2.** Procédé selon la revendication 1, comprenant une étape de détermination par ledit récepteur de la séquence de chacun des n-grammes à partir desdites informations ayant subi une rotation T'_S et de déduction des informations secrètes chiffrées I_S.

**3.** Procédé selon l'une quelconque des revendications 1 ou 2, dans lequel ledit support d'informations T_S est un texte écrit en langage naturel.

**4.** Procédé selon l'une quelconque des revendications 1 à 3, dans lequel l'émetteur et le récepteur ont une séquence de séparateur en commun, par exemple un retour chariot, deux espaces vides et un retour chariot.

**5.** Procédé selon l'une quelconque des revendications 1 à 4, dans lequel le chiffrement desdites informations cachées (I_S) est minimal et ladite rotation constitue lesdites informations secrètes qui sont transmises de l'émetteur au récepteur sans utiliser de clé de chiffrement.

**6.** Procédé selon l'une quelconque des revendications 1 à 5, dans lequel les informations secrètes (I_S) sont chiffrées en utilisant un chiffrement faible pour protéger uniquement contre l'écoute clandestine, mais le nombre secret N peut être retrouvé au moyen d'une attaque du texte en clair.

**7.** Procédé selon l'une quelconque des revendications 1 à 5, dans lequel lesdites informations secrètes (I_S) sont chiffrées en utilisant un chiffrement fort pour protéger la clé de chiffrement contre une attaque de texte en clair.

**8.** Émetteur destiné à transmettre des informations secrètes (I_S) à un récepteur sur un canal de communication, ledit émetteur étant adapté pour :

- déterminer un diagramme syntaxique G(T_S) à partir d'un support d'informations T_S, les noeuds dudit diagramme syntaxique G(T_S) représentant les n-grammes dudit support d'informations T_S,
- chiffrer lesdites informations secrètes I_S dans un nombre secret N,
- déterminer une rotation à partir dudit nombre secret N, le nombre N relatif aux informations secrètes I_S étant plus petit que le nombre maximal de rotation B(T_S), et décomposer ledit nombre secret N en une séquence représentant les permutations sur chacun des arcs sortants des n-grammes,
- appliquer ladite séquence sur chacun des arcs sortants des n-grammes afin de produire des informations ayant subi une rotation T'_S, l'émetteur étant adapté pour transmettre lesdites informations ayant subi une rotation T'_S à un récepteur.

**9.** Récepteur destiné à recevoir des informations secrètes (I_S) d'un émetteur sur un canal de communication, ledit récepteur étant adapté pour :

- recevoir des informations ayant subi une rotation T'_S d'un émetteur,
- déterminer un diagramme syntaxique G(T'_S) à partir des informations ayant subi une rotation T'_S, les noeuds dudit diagramme syntaxique G(T'_S) représentant les n-grammes desdites informations ayant subi une rotation T'_S,
- déterminer une séquence à partir de chacun des n-grammes provenant du diagramme syntaxique G(T'_S) desdites informations ayant subi une rotation T'_S, ladite séquence représentant les permutations sur chacun des arcs des n-grammes,
- calculer un nombre secret N à partir de ladite séquence, et

- déduire les informations secrètes I_S chiffrées dans ledit nombre secret N.

10. Réseau de communication comprenant au moins un émetteur selon la revendication 8 et un récepteur selon la revendication 9.

11. Produit-programme informatique comprenant des instructions exécutables sur ordinateur pour mettre en oeuvre un procédé selon l'une quelconque des revendications 1 à 7.

12. Support de stockage numérique codant un programme d'instructions exécutable sur une machine pour mettre en oeuvre un procédé selon l'une quelconque des revendications 1 à 7.

Figure 1

## Annex 1

```
Function fromN_iToSigmas(n_1, .., n_V) { // returns a list of sigma_i
For i from 1 to V
{
        sigma[i]=new empty list
        Bi=B[i]
        ki=k[i]
        int [] kij = new int[V]
        for j from 1 to V
        {
                kij[j]=k[i,j]
        }

        Repeat k[i] times:
        {
                j=1
                while (kij[j]==0 or n_i >= kij[j]*Bi/ki)
                {
                        n_i=n_i-kij[j]*Bi/ki
                        j = j + 1
                }
                sigma[i].addElement(j)
                Bi=kij[j]*Bi/ki
                kij[j]=kij[j]-1
                ki=ki-1
        }
}
Return sigma
}
```

## Annex 2

```
Procedure Permutation2Number( Ω_i){ // returns the n_i corresponding to Ω_i
N_i=0;
B_i=1;
For j from 1 to V do {k_{ij}=0;}
K_i=0;
For k from 1 to k do{
    j= Ω_i[length(Ω_i)-k+1];
    k_i=k_i+1;
    k_{ij}=k_{ij}+1;
    B_i=k_i/k_{ij}B_i;
    For j' from 1 to j-1 do {n_i=n_i+k_{ij'}/k_i B_i;}
    }
return(n_i);
}
```

## Annex 3

Procedure Rotation2Number(n_1,...,n_V){
N=0;
For i from V down to 1 do {N = n_{i}+N×B_{i};}
Return(N);
}

**EP 3 001 402 B1**

**Patent documents cited in the description**

- US 6823068 B